# EUROPEAN PATENT SPECIFICATION

(11) **EP 4 165 971 B1**
(45) Date of publication and mention of the grant of the patent: **13.11.2024**
(21) Application number: 22200138.0
(22) Date of filing: 06.10.2022
(51) Int. Cl.: A01D 34/00, A01D 34/63, A01D 34/64, A01D 34/68, A01D 34/76, A01D 34/81

(54) **TOOL AND APPARATUS PROVIDED WITH SUCH A TOOL**
WERKZEUG UND GERÄT MIT EINEM SOLCHEN WERKZEUG
OUTIL ET APPAREIL POURVU D'UN TEL OUTIL

(30) Priority: 14.10.2021 IT 202100026309
(43) Date of publication of application: 19.04.2023
(73) Proprietor: Eurosystems S.p.A., 42045 Luzzara (Reggio Emilia) (IT)
(72) Inventor: BOVI, Fabio, 42045 LUZZARA (RE) (IT)
(74) Representative: Corradini, Corrado

(56) References cited:
- US-A- 3 194 284
- US-A- 5 177 871
- US-A1- 2003 024 129
- US-A1- 2017 202 138
- US-B2- 7 101 295

## Description

### TECHNICAL FIELD

The present invention relates to a working apparatus comprising a working tool.

More particularly, the present invention relates to a working tool, e.g. for an agricultural machine, provided with a drive assembly for a working member and a tensioning assembly for a flexible connection member of said drive assembly.

### PRIOR ART

Working tools such as, but not limited to, tools for agricultural machines, which comprise a working member adapted to be rotated with respect to a predetermined rotation axis in order to perform the work for which the tool is designed, are known.

The working member may, for example, be a cutting blade or a cutting wire for cutting grass, a drill bit, a milling cutter, an auger, etc.

To set the working member in rotation, a drive assembly is used which allows a torque to be transferred from a drive motor, for example mounted on the agricultural machine, to the working member.

A known embodiment of the drive assembly comprises a first shaft rotatably associated with a rigid frame solely with respect to a first rotation axis (adapted to be connected to the drive motor of the tool) and on which a first pulley is keyed, a second shaft rotatably associated with said rigid frame solely with respect to a second rotation axis, with which the working member is rotationally associated and on which a second pulley is keyed.

The transmission of torque between the first and second shafts takes place by means of a flexible transmission member at least partially wound around the first pulley and the second pulley.

This flexible transmission member, generally a belt, in particular made of polymeric material with a trapezoidal cross-section, with use tends to wear and stretch, ending up not adhering well to the pulleys and therefore causing a decrease in the transmissible torque which manifests itself as slippage of the flexible transmission device.

To overcome this problem, tensioning assemblies are known which are provided with an idle wheel or a skid, hinged to a sliding frame or hinged to the rigid frame, which is constantly pushed against the flexible transmission member by a spring in order to stretch it, thus recovering the play due to wear as it arises.

However, this solution is not without its problems, in particular, the contact between the idle wheel and the flexible transmission member contributes to the wear of this member. US7101295 discloses a power transmission device comprising a driving side supporting member; a first transmission wheel supported by said driving side supporting member;
a driven side supporting member supported by said driving side supporting member in a manner enabling said driven side supporting member to be moved in a direction orthogonal to the rotational axis of said first transmission wheel; a second transmission wheel supported by said driven side supporting member; a power transmission member having an endless loop configuration which is wound around said first transmission wheel and said second transmission wheel to enable power transmission between said first and second transmission wheels.

Aim of the present invention is to solve said disadvantage of the prior art. Another aim is that of achieving such objective within the context of a rational, efficacious and relatively cost effective solution.

Such aims are achieved by the characteristics of the invention reported in the independent claims. The dependent claims outline preferred and/or particularly advantageous aspects of the invention.

### DISCLOSURE OF THE INVENTION

The invention, particularly, makes available a tool as defined in claim 1.

Thanks to this solution, a tool provided with a tensioning assembly is made available, which effectively allows the flexible transmission member to be kept under tension without the need to introduce additional contact surfaces with the flexible member which wear it out, thus allowing to extend the useful life of the flexible transmission component.

Compared to prior art devices, in fact, the solution makes it possible to exploit the contact surfaces of the pulleys to tension the flexible transmission member, without the need to introduce the idle wheel or the skid of the prior art devices.

Another aspect of the invention provides that the tensioning assembly comprises an elastic body interposed between the first section and the second section, configured to push the second section in a direction away from the first section along the sliding axis.

Thanks to this solution, the tensioning assembly is configured to automatically generate an elastic force that allows the second section to be pushed away from the first section, and therefore the second drive shaft to be pushed away from the first drive shaft, without the need for manual operation by a tool user.

The tensioning assembly is therefore particularly effective.

Still another aspect of the invention provides that the elastic body can be a helical compression spring.

Thanks to this solution, the tensioning assembly a particularly functional construction architecture that is intuitive and quick to assemble.

A further aspect of the invention provides that the tool comprises an end-of-stroke assembly configured to limit the minimum distance between the first drive shaft and the second drive shaft along the sliding axis. Thanks to this solution, the tool is particularly safe and reliable.

In particular, thanks to the end-of-stroke assembly, it is possible to avoid the possibility that, in the event that the tool encounters a resistant force acting in the opposite direction to that of the elastic element along the sliding axis, the second drive shaft may move towards the first, with the result that in this case the flexible transmission member would no longer be under tension and could slip on the pulleys.

This is particularly common where the tool is a brush cutter tool or any other tool that makes a cut in at least one direction perpendicular to the rotation axis of the second shaft. In this case, during the advancement, for example through the grass to be cut, a resistant force is generated that tends, in absence of the end-of-stroke assembly, to bring the second shaft closer to the first shaft, overcoming the force of the elastic element, i.e. the spring.

Overall, the the end-of-stroke assembly is therefore configured to prevent a resisting force acting in the opposite direction to that of the elastic element along the sliding axis from overcoming the force of the elastic element (i.e. from causing deformation, particularly of the elastic element) causing the second drive shaft to approach the first drive shaft.

This situation also arises in the event of accidental impacts while using the tool. It should be pointed out that it is not possible to use elastic elements that generate a force greater than these resistant forces, as they would tend to generate a too high force on the flexible transmission member.

Furthermore, a further aspect of the invention provides that the end-of-stroke assembly is configured to allow for a variation in the value of the minimum distance between the first drive shaft and the second drive shaft. Thanks to this solution, the end-of-stroke assembly is configured to adapt to the conditions of use/wear of the flexible drive member.

In particular, as the flexible transmission member wears out and/or stretches, the elastic element by pushing the second drive shaft away from the first drive shaft, allows the second drive shaft to be placed at a gradually greater distance from the first drive shaft, so as to compensate for the wear/stretch of the flexible transmission member and to maintain the correct tension of the flexible transmission member throughout its useful life.

The end-of-stroke assembly, in turn, by allowing a variation of the minimum distance, ensures that there is always a correct end-of-stroke even when the flexible transmission member is elongated and/or worn, so as to avoid slippage.

Another aspect of the invention provides that the end-of-stroke assembly may be configured to automatically vary the value of the minimum distance between the first shaft and the second shaft abased on the value of the distance between the first shaft and the second shaft.

Thanks to this solution, the end-of-stroke assembly does not need to be controlled by an operator using the tool.

As a result, it is possible to constantly maintain the correct functioning of the tool, and to avoid the possibility of any malfunction due to possible forgetfulness by the operator.

A further aspect of the invention provides that the end-of-stroke assembly may comprise:
- an abutment surface integral with the second section sliding along the sliding axis and turned towards one end of the first section distal from the second section,
- a cam rotatably associated with the first section with respect to a rotation axis transverse to the sliding axis and which contacts the abutment surface, so that a rotation of the cam with respect to its rotation axis in a predetermined direction of rotation causes a thrust on the abutment surface in the direction in which the second shaft moves away from the first shaft.

Thanks to this solution, the end-of-stroke assembly has a particularly simple construction structure that can be easily and quickly assembled.

Furthermore, a further aspect of the invention provides that the rotation axis of the cam may be horizontal and perpendicular to the sliding axis, and that the cam may be provided with a cam profile subtended at an angle having a centre on the rotation axis of the cam and less than 180°, and that from its upper end which is at a predetermined distance from the rotation axis, it gradually presents a smaller distance from the rotation axis with a monotonous decreasing course until a lower end of the cam profile.

Thanks to this solution, when the abutment surface advances with the rest of the second section along the sliding axis, i.e. it moves along the sliding axis in a direction away from the second drive shaft from the first drive shaft, the cam rotates due to its own weight by rotating it constantly maintains contact with the abutment surface.

In particular, the special cam profile allows to gradually compensate the stroke made by the abutment surface along the sliding axis, so that the contact between the cam and the abutment surface is obtained in every position of the abutment surface along the sliding axis.

In particular, each displacement of the abutment surface along the sliding axis in a direction away from the first drive shaft causes a rotation of the cam due to the weight force acting on it, which allows the gradually greater protruding portion to be placed (i.e. further away from the rotation axis of the cam) in contact with the abutment surface.

Thanks to this there is therefore provided an automated system for varying, or adjusting, the minimum distance between the first shaft and the second shaft without the need for any electrically actuated sensors or actuators.

The proposed solution is therefore particularly robust, simple and compact.

In particular, the rotation of the cam so that the most protruding portion rotates downwards can be assisted by an elastic element configured to pull downwards a portion of the cam interposed between said cam profile and the rotation axis.

This elastic element improves the operating speed, prevents cam jamming due to possible prolonged non-use of the tool and prevents vibrations from causing the cam to rotate in a direction opposite to that imparted by the weight force of the cam.

The invention further makes available a landscaping apparatus comprising:
- an agricultural machine provided with a support frame, a pair of drive wheels rotatably associated with said frame, a motor fixed to said frame and mechanically connected to a drive shaft of the agricultural machine,
- a tool according to one or more of the aspects outlined above, wherein the first shaft is adapted to be mechanically coupled to the drive shaft to receive a torque therefrom.

### BRIEF DESCRIPTION OF THE DRAWINGS

Further features and advantages of the invention will be more apparent after reading the following description provided by way of non-limiting example, with the aid of the illustrated figures in the accompanying drawings.
Figure 1 is a front view from above of an apparatus according to the invention with a first segment and a second segment of a tool in a first position.
Figure 2 is a front view from above of the apparatus of figure 1 with the first segment and the second segment of the tool in a second position.

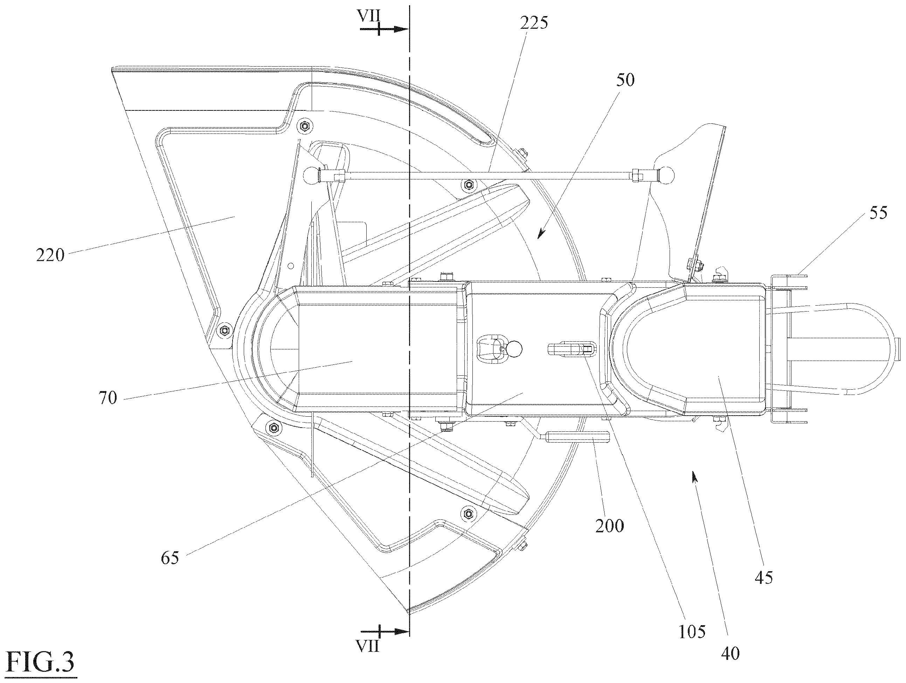

Figure 3 is a front view from above of a tool of the apparatus of figure 1.
Figure 4 is a front view from below of the tool of figure 3.
Figure 5 is a schematic section view along the line V-V of figure 4.

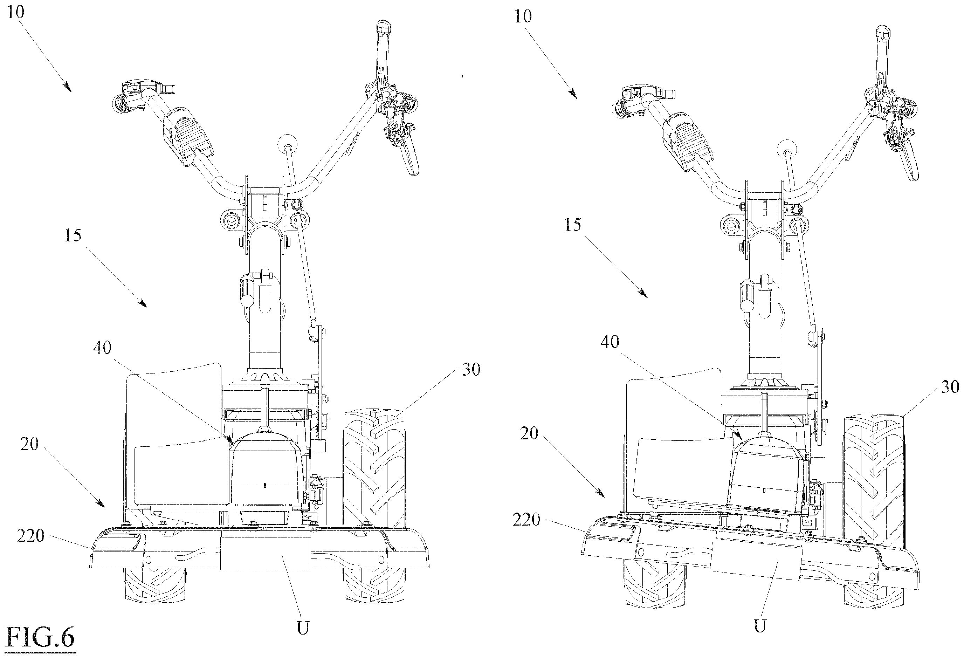

Figure 6 is a front view of the apparatus of figure 1 with the tool in a reference position on the left, and with the tool in an inclined position on the right.

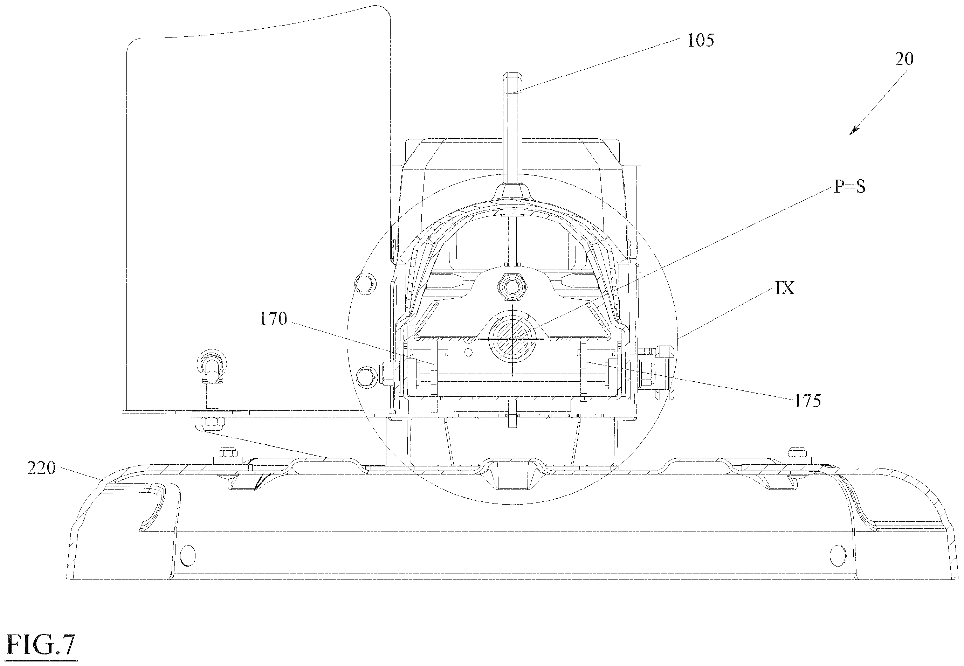

Figure 7 is a section view along the line VII-VII of figure 3 in which the tool is in the reference position.

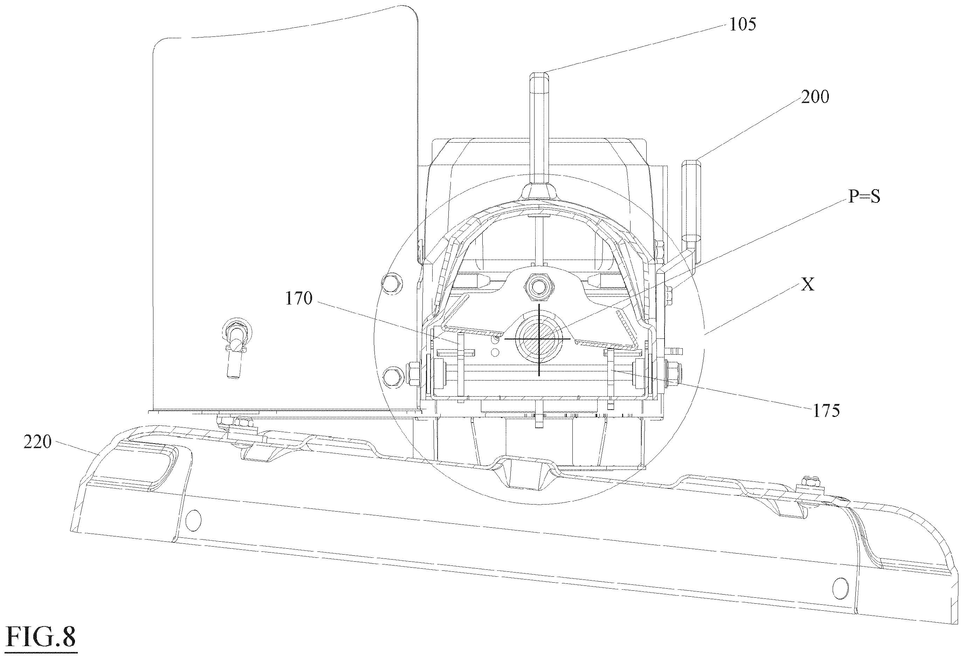

Figure 8 is a section view along the line VII-VII of figure 3 in which the tool is in the inclined position.

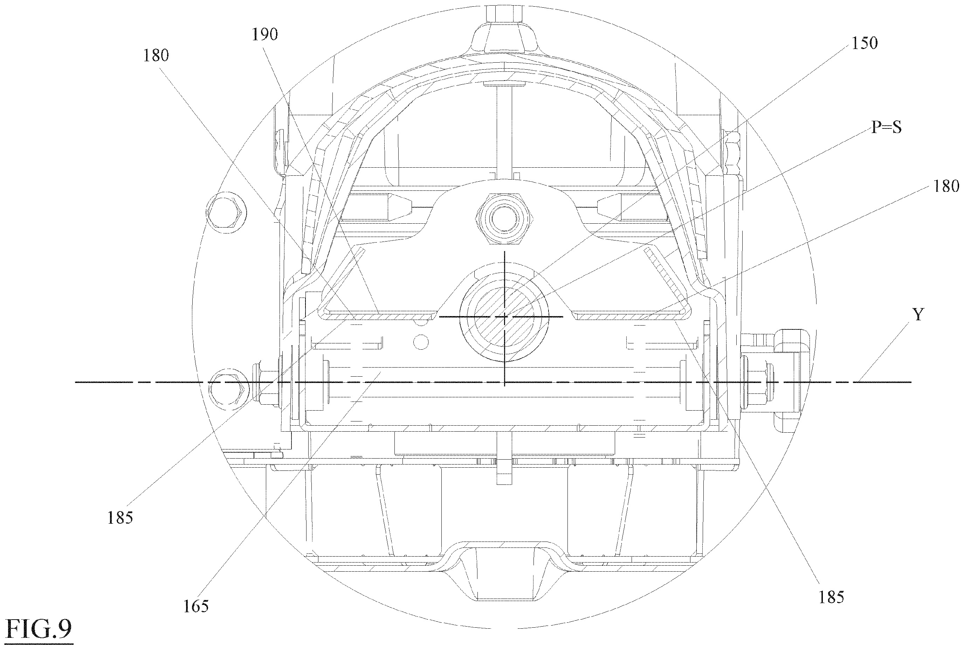

Figure 9 is an enlarged view of the portion IX of figure 7.

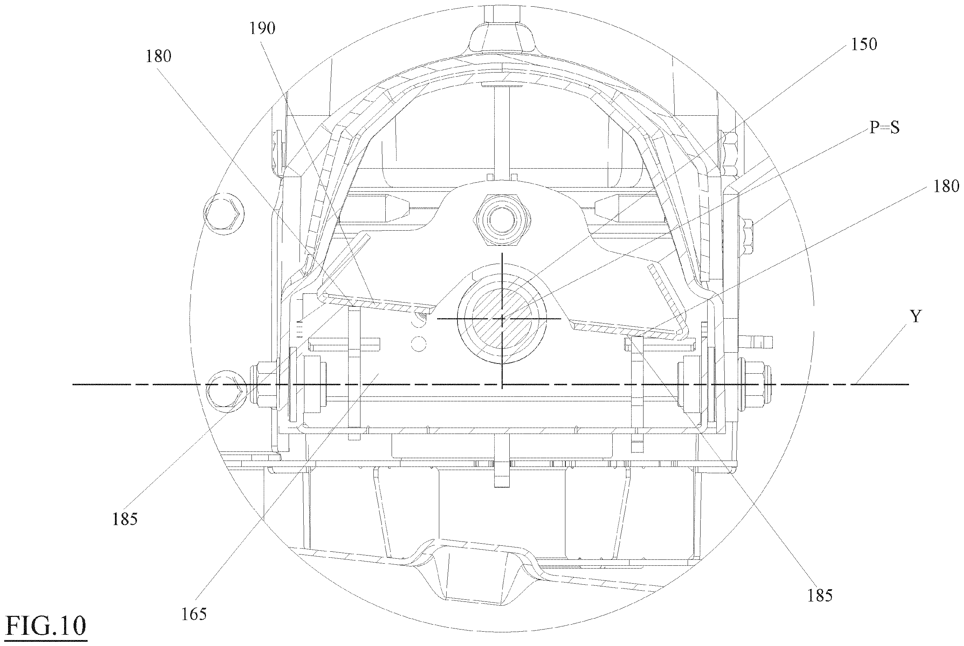

Figure 10 is an enlarged view of the portion X of figure 8.

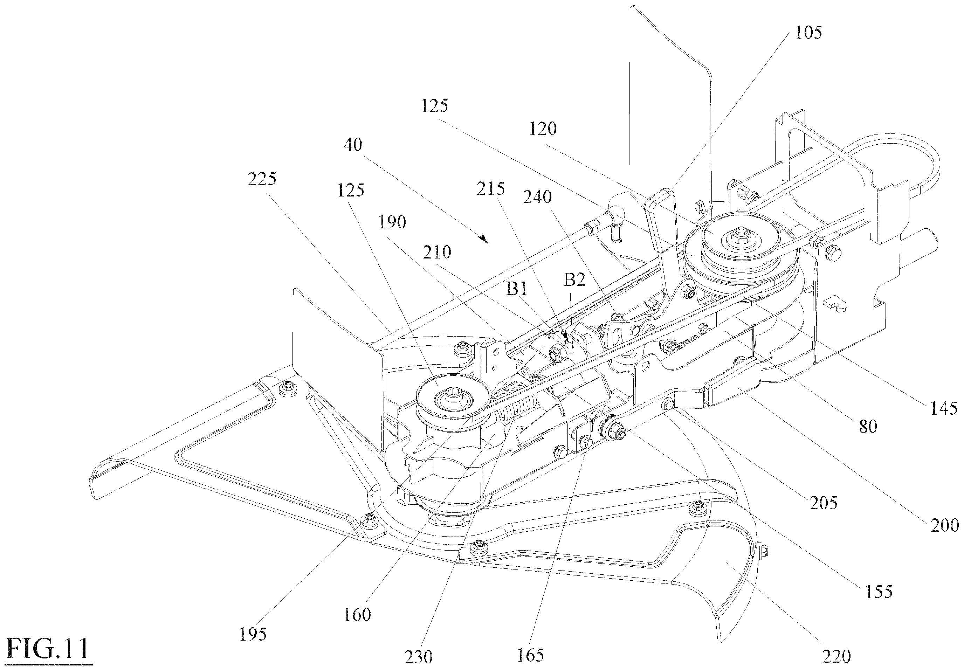

Figure 11 is an axonometric view of the tool in figure 3, in which the closing covers have been eliminated to show various elements of the tool.

### Detailed description

With particular reference to such figures, an apparatus has been globally indicated by 10, for example a landscaping apparatus 10, in particular a brush cutter apparatus 10 configured to perform landscaping operations, for example, turf mowing operations.

The apparatus 10 comprises an agricultural machine 15, in particular configured to allow at least one tool 20 to be removably connected to the agricultural machine 15, for example for working the soil or for landscaping.

The tool 20 is driven by mechanical energy, in particular a torque, generated by the agricultural machine 15.

The agricultural machine 15 comprises a support frame, a motor (not illustrated) installed on the support frame, and at least one pair of drive wheels 30 including a left wheel and a right wheel, i.e., a left wheel located on a left sidewall of the agricultural machine 15 and a right wheel located on a right sidewall of the agricultural machine 15, which are rotatably associated with the support frame, for example (only) with respect to substantially coaxial rotation axes, and which receive a drive torque from the motor.

In this discussion, the terms "lower" and "upper" refer respectively to the proximal portion and the distal portion of the considered element, to the resting ground of the agricultural machine 15. The term "vertical" indicates a component arranged substantially perpendicular to the resting ground.

The term "horizontal" indicates a component arranged substantially parallel to the resting ground. Furthermore, the terms "front" and "rear" are to be interpreted according to the normal forward direction (not reverse) of the agricultural machine 15.

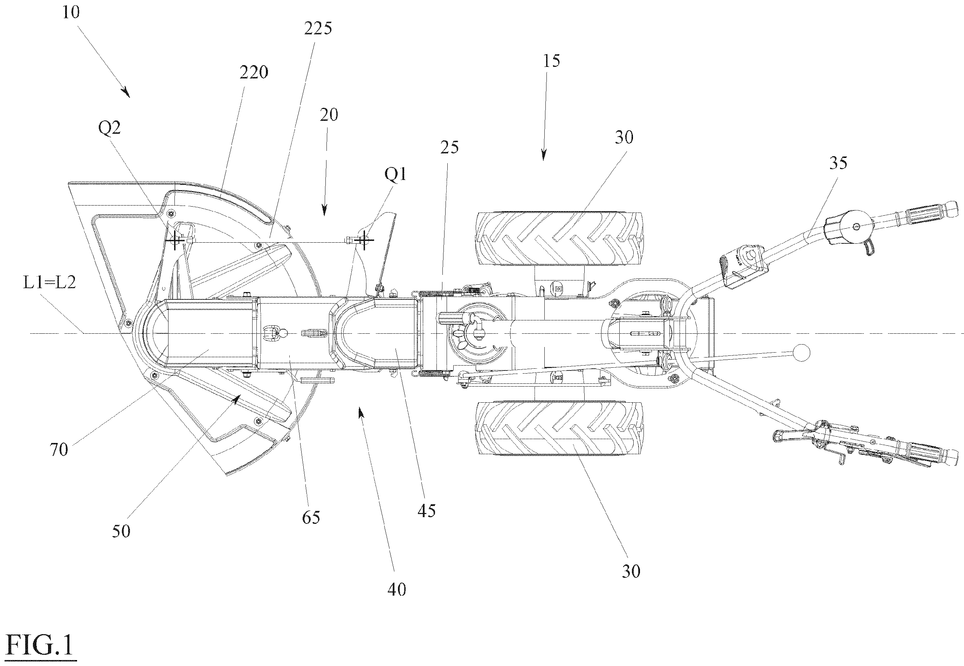

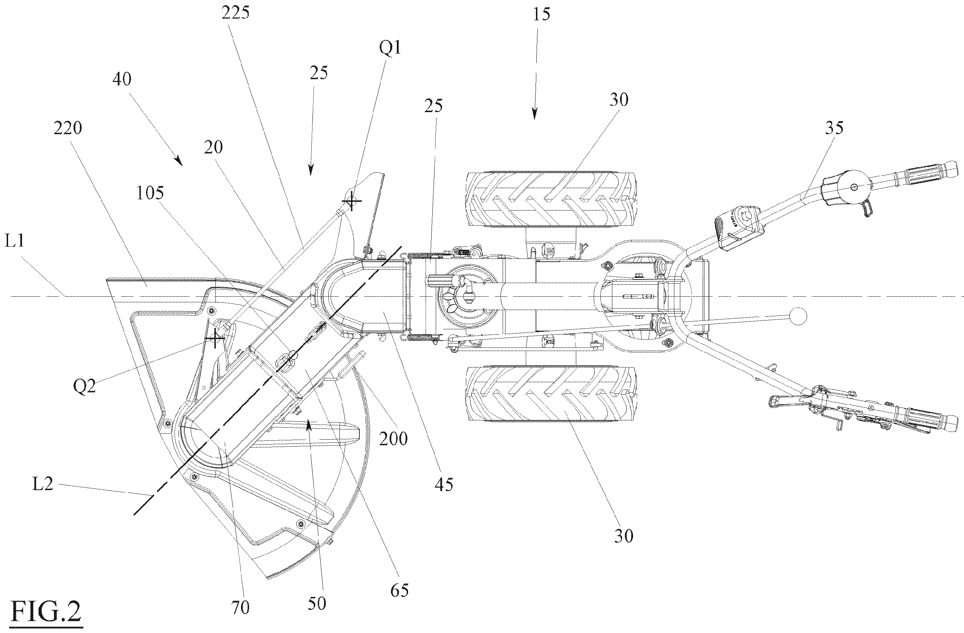

Furthermore, the terms "left" and "right" are to be interpreted on the basis of a plan view such as that in figures 1 and 2 and on the basis of the normal forward direction of the agricultural machine 15.

The agricultural machine 15 has a longitudinal (essentially horizontal) axis, which is for example parallel to a normal forward direction (not in steering conditions) of the agricultural machine 15.

The axes of rotation of the wheels 30 are substantially perpendicular to the longitudinal axis of the agricultural machine 15 (and are also horizontal).

The agricultural machine 15 comprises an output shaft (not visible in the figures as it is covered by a protective case) adapted to be mechanically connected to the tool in order to transmit to it the torque necessary to actuate the tool.

This output shaft may be in the form of a power take-off or, as in the illustrated embodiment, of a shaft with which a drive pulley (or a toothed wheel) is rigidly integral in rotation. In the preferred embodiment illustrated in the figures, the agricultural machine 15 10 is a walking tractor.

In particular, it is provided only with the pair of wheels 30, which can be both drive wheels and, for example, independent in rotation of each other.

The walking tractor comprises a handlebar 35 (for example provided with a pair of diverging handlebars 90), preferably hinged to the support frame (with respect to a substantially vertical rotation axis), to govern the directionality of the walking tractor and on which a plurality of commands (buttons and levers) are placed that allow to control the actuation of the motor, the advancement and the actuation of the tool 20.

These commands will not be further described as they are known to those skilled in the art.

For the typical dimensions of a walking tractor, the maximum transverse overall dimensions of the handlebar 35 in a direction perpendicular to the longitudinal axis of the agricultural machine 15 (i.e. along a direction parallel to the axes of rotation of the wheels 30) are equal to or greater than the maximum transverse overall dimensions defined along the same transverse direction by the pair of wheels 30.

In particular, the handlebars 35 can protrude laterally both to the right and to the left with respect to the pair of wheels 30.

In the case of hinged handlebars 35, these overall dimensions are to be taken into account when the walking tractor advances along the normal forward direction and is therefore in a steering angle position equal to zero.

When the handlebars 35 is rotated to perform a steering manoeuvre it could protrude with respect to the overall dimensions of the wheels 30 only on the left or only on the right.

The support frame of the agricultural machine 15, i.e. the walking tractor, and, for example, the protective cases associated therewith, have smaller transverse overall dimensions than the handlebar 35.

In other words, the handlebar 35 is, in the illustrated embodiment, the element of the walking tractor with the largest transverse overall dimensions of all the elements of the walking tractor.

However, it cannot be ruled out that in an alternative embodiment not illustrated, it may be the pair of wheels 30 that altogether has the largest transverse overall dimensions of all the elements of the walking tractor.

The working apparatus 10 further comprises, as anticipated above, a tool 20 actuated by the output shaft of the agricultural machine 15, i.e. the walking tractor.

In the illustrated embodiment, the tool 20 is a landscaping tool 20, in particular a brush cutter tool 20 adapted to be connected to the agricultural machine 15 and configured to operate for mowing the turf.

Notwithstanding the embodiment illustrated, it will become clear in the following that the special characteristics described below can also be applied to other types of tools, such as milling cutters, grinding wheels, drills, augers or in any case any tool 20 provided with a working member suitable for being set in rotation with respect to a rotation axis in order to perform the work for which it was designed (such as drill bits, grinding wheel discs, milling cylinders, drill bits, etc.)

The tool 20 therefore comprises a working member (not illustrated), in particular in the illustrated case of the brush cutter tool 20 the working member is a cutting member U, which allows said mowing to be carried out and which, as anticipated above, is driven in rotation by means of the torque transmitted by the agricultural machine 15 in the manner that will appear more clearly below.

The cutting member U can for example be a blade or a wire wound on a spool, as known to the skilled in the art.

For example, the cutting tool 20 (or tool 20 for cutting) may comprise a central body carrying a plurality of flexible cutting filaments (not illustrated as known per se), which protrude radially from the central body outwards.

The brush cutter tool 20 comprises, first of all, a support arm 40 adapted to be connected to the agricultural machine 15.

In particular, the support arm 40 has a first longitudinal end by means of which it is connected to the agricultural machine 15 and an opposite second longitudinal end at which the cutting member U is arranged.

In detail, the support arm 40 comprises a first segment 45, which makes available said first longitudinal end of the support arm 40, and a second segment 50 which makes available said second longitudinal end of the support arm 40.

The first segment 45 may have a rigid base frame T1, i.e. not deformable under normal working loads to which it is subjected, for example made of metal.

The first segment 45 may take the form of a first tubular body, for example with a quadrangular section, defining a through channel.

In fact, in the embodiment illustrated, the base frame T1 is substantially U shaped, i.e. it has a base section (rectilinear and substantially flat) which substantially defines the base of the first tubular body and two opposite lateral sections which are derived (vertically and upwards) from the base section, substantially squared therewith, and define opposite lateral faces of the first tubular body.

Again, the first segment 45 may comprise a cover adapted to occlude the base frame T1 in a position opposite to the base section, so as to occlude superiorly the through channel defined by the first tubular body, i.e. by its base frame T1.

The first segment 45 is removably connected to the agricultural machine 15, i.e. to its support frame, by means of fixing means (at least in part placed at the first longitudinal end of the arm).

Such fixing means preferably allow the arm to be fixed to the agricultural machine 15 without residual degrees of freedom between the first longitudinal end and a portion of the frame of the agricultural machine 15 directly in contact with the arm.

By way of example only, such fixing means may comprise snap-fitting means 55 and elastic retaining means.

For example, said snap-fitting means 55 may comprise a pair of opposite forks made on the first segment 45 of the support arm 40, for example which are derived from the lateral faces of the first tubular body, and receiving seats made in the support frame of the agricultural machine 15 each of which is adapted to accommodate snap-fittingly a respective one of said forks.

Said elastic retaining means may comprise a pair of elastic traction springs, each having an end associated (coupled) with the support frame of the agricultural machine 15 and an opposite end associated with the first segment 45 of the support arm 40, for example coupled in a respective ear made on the first segment 45 and which, for example, is laterally derived from a respective lateral face of the first tubular body.

The first segment 45 has along its own longitudinal axis L1, for example substantially horizontal, an end connected to the support frame as described above and an opposite free end substantially aligned with each other along said longitudinal axis of the first segment 45.

The longitudinal axis of the first segment is preferably parallel to the longitudinal axis of the agricultural machine. In detail, the longitudinal axis of the first segment lies on a vertical centreline plane of the agricultural machine on which the longitudinal axis of the agricultural machine also lies. This vertical centreline plane is substantially placed at equal distance from the left wheel and the right wheel.

The second segment 50 has along its own longitudinal axis L2, for example substantially horizontal, a first axial end connected to the free end of the first segment 45 and an opposite second axial end aligned with the first axial end along the longitudinal axis L2 and at which the working member, i.e. the cutting member U, is arranged.

The second segment 50 is movably connected to the first segment 45, in detail it is rotatably associated therewith.

In particular, the second segment 50, for example by means of said first longitudinal axial end, is hinged to the first segment 45 (i.e. to said free end thereof), with respect to at least one hinge axis C, for example substantially vertical and preferably also transverse (for example orthogonal) to the longitudinal axes L1,L2 of the first segment 45 and of the second segment 50.

Further, the second segment 50 is connected to the first segment 45 with a possibility of rotating between a first position in which the longitudinal axes L1,L2 of the first segment 45 and of the second segment 50 lie on parallel vertical lying planes or between which a first angle (of non-zero value) is defined, and at least a second position in which the longitudinal axes L1,L2 of the first segment 45 and of the second segment 50 lie on vertical lying planes between which a second non-zero angle and/or greater than the first angle is defined.

The rotation about the hinge axis C is preferably the only degree of freedom present between the first segment 45 and the first axial end of the second segment 50.

A possible constructional embodiment which makes available the hinging of the second segment 50 to the first segment 45 will be illustrated in detail below.

In detail, the second segment 50 comprises a first section 65, which makes available said first axial longitudinal end of the second segment 50, and a second section 70 which makes available said second axial longitudinal end of the second segment 50 at which the cutting member U is arranged.

The first section 65 and the second section 70 of the second segment 50 are integral in rotation about said hinge axis C with respect to the first segment 45.

Furthermore, the rotation about the hinge axis C is preferably the only degree of freedom present between the first section 65 of the second segment 50 and the first segment 45. The first section 65 may have a respective rigid base frame T2, that is, not deformable under the normal work loads to which it is subjected, for example made of metallic material.

The base frame T2 of the first section of the second segment 50 is therefore hinged with respect to the hinge axis C to the base frame T1 of the first segment 45.

The first section may take the form of a second tubular body, for example with a quadrangular section, defining a second through channel.

In particular, the base frame T2 of the first section 65 may be substantially U-shaped, i.e. having a base section (rectilinear and substantially planar) which substantially defines the base of the second tubular body and two opposite lateral sections deriving (vertically and upwards) from the base section, substantially squared therewith, and defining opposite lateral faces of the second tubular body.

Again, the first section 65 can comprise a cover selectively adapted to occlude the base frame in a position opposite to the base section, so as to occlude superiorly the through channel defined by the first section 65 of the second segment 50.

The second section 70 may comprise and may have a respective rigid base frame T3, that is, not deformable under the normal work loads to which it is subjected, for example made of metallic material.

The base frame T3 of the second section 70 is made independent of the base frame T2 of the first section 65 and is connected thereto in the manner illustrated below.

In the same way as the first section 65, the second section 70 may be in the form of a tubular body, in particular a third tubular body, for example with a quadrangular section and, defining a third through channel.

In particular, the base frame T3 of the second section 70 is substantially U-shaped, i.e. it has a base section (straight and substantially planar) which substantially defines the base of the third tubular body and two opposite lateral sections deriving (vertically and upwards) from the base section, substantially squared therewith, and define opposite lateral faces of the third tubular body.

Furthermore, the second section 70 can comprise a respective cover selectively adapted to occlude the base frame in a position opposite to the base section so as to occlude superiorly the third through channel defined by the second section 70 of the second segment 50.

As mentioned above, the second segment 50, by hinging the first section 65 to the first segment 45, can therefore rotate about said hinge axis C.

More specifically, the tool 20 may comprise a sleeve coaxial to the hinge axis C and rigidly fixed (i.e. fixed without residual degrees of freedom) to the first segment 45, for example to the base frame T1 of the first segment 45.

In particular, the first sleeve 75 has a longitudinal central axis coaxial to the hinge axis C and is fixed to the first segment 45 arranged with said longitudinal central axis transverse, for example orthogonal, to the longitudinal axis L1 of the first segment 45, i.e. arranged with said longitudinal central axis which is substantially vertical.

For example, the first sleeve 75 is cylindrical and axially hollow.

The first section 65 of the second segment 50 of the support arm 40, has a flanging, i.e. a cylindrical jacket 80, which circumferentially embraces the first cylindrical sleeve 75 so as to thus form the hinge between the first segment 45 and the second segment 50.

In the illustrated embodiment, the (flanging, i.e., said) cylindrical jacket 80 is derived from the base frame T2 of the first section 65 and is preferably made in a monolithic body therewith.

A pair of bushings, which are interposed between an inner cylindrical surface of the cylindrical jacket 80 and an outer cylindrical surface of the first sleeve 75 may be associated with the cylindrical jacket 80, so as to allow the second segment 50 to rotate about the first sleeve 75 with reduced (substantially absent) friction.

The brush cutter tool 20 then comprises a rotation blocking assembly of the second segment 50 with respect to the first segment 45 configured to selectively block the relative rotation with respect to the hinge axis C between the first segment 45 and the second segment 50, at least in the first position and in the second position, and to selectively allow a free rotation between the first segment 45 and the second segment 50.

The blocking assembly comprises, first of all, a toothed crown 85 associated with one between the first segment 45 and the second segment 50, in particular an angular section of toothed crown 85 associated with one between the first segment 45 and the second segment 50.

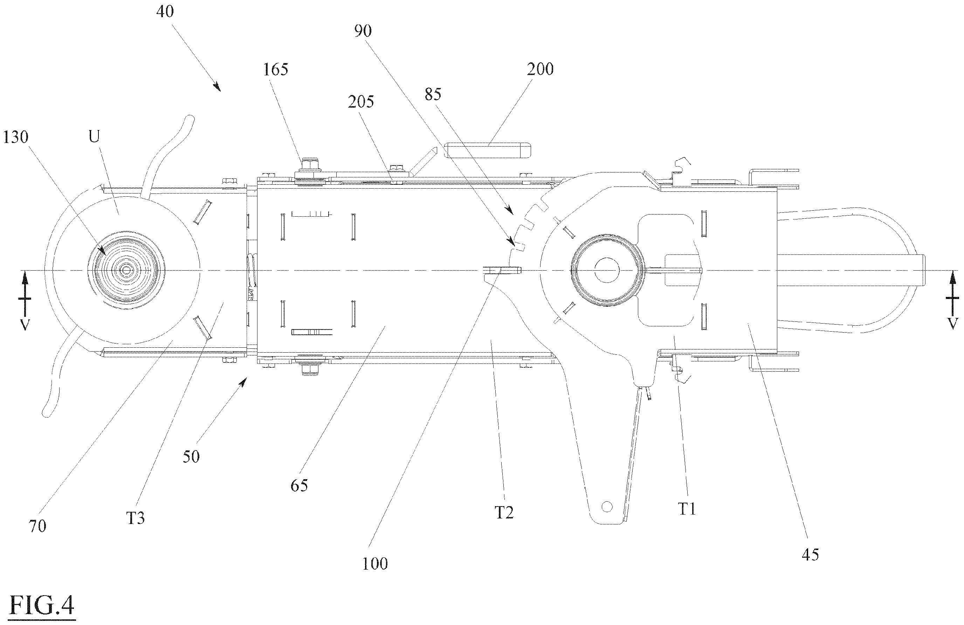

For example, as can be seen in figure 4, the toothed crown 85 is rigidly fixed (i.e. fixed without residual degrees of freedom) to the first segment 45.

The toothed crown 85 has a plurality of notches, angularly spaced apart along the circumferential development of the toothed crown 85, and a plurality of grooves 90 each defined between a respective pair of consecutive notches along the circumferential development of the toothed crown 85.

The fixing assembly further comprises an insertion pin 100 associated with the other one between the first segment 45 and the second segment 50, for example associated with the second segment 50, particularly with the first section 65 of the second segment 50.

In particular, the insertion pin 100 is operable between an engagement position in which it is constrained by shape coupling to the toothed crown 85 and prevents rotation of the second segment 50 with respect to the first segment 45, and a disengagement position in which it is released from the toothed crown 85 and allows rotation of the second segment 50 with respect to the first segment 45.

In other words, in the engagement position the insertion pin 100 is selectively inserted into one of the grooves 90 defined between the notches of the toothed crown 85 defining a shape coupling with the toothed crown 85 which prevents any rotation of the second segment 50 with respect to the first segment 45.

In particular, each groove 90 is arranged in a respective angular position along the circumference of the toothed crown 85 that is different from the other grooves 90.

The coupling of the insertion pin 100 with each of the grooves 90 therefore defines a different second position of the second segment 50 with respect to the first segment 45. That is, depending on the groove 90 in which the insertion pin 100 is inserted, there is a different second angle defined between the longitudinal axes L1 ,L2 of the first segment 45 and of the second segment 50.

In the disengagement position, the insertion pin 100 is moved away from the toothed crown 85, that is, it does not in any way make contact with it, and the second segment 50 is free to rotate with respect to the second segment 50.

The blocking assembly also comprises an actuating lever 105 integral with the insertion pin 100 and configured to move the same between the engagement position and the disengagement position.

In particular, the actuating lever 105 is hinged to one between the first segment 45 and the second segment 50.

For example, in the illustrated embodiment where the crown is fixed to the first segment 45, the actuating lever 105 is hinged to the second segment 50, with respect to a substantially horizontal hinging axis and orthogonal to the longitudinal axis L2 of the second segment 50.

In detail, the actuating lever 105 can be hinged to the first section 65 of the second segment 50, internally to the second through channel defined by it, by means of a support bracket 110 which is derived cantilevered and substantially squared from the first section 65 of the base frame T2 of the second tubular body of the first segment 45, and which has a slot for receiving a fixing pin connecting the actuating lever 105 which defines said hinging axis for the actuating lever 105.

In particular, the actuating lever 105 has an upper end, arranged externally to the second tubular body defined by the first section 65 of the second segment 50, at which a gripping handle may be arranged.

The actuating lever 105 then has an opposite lower end to which the insertion pin 100 is rigidly fixed (i.e., fixed without residual degrees of freedom).

The actuating lever 105 is movable, about said hinging axis, between a distancing position, corresponding to the disengagement position of the insertion pin 100, wherein the lower end of the actuating lever 105 is distal from the toothed crown 85, and a nearing position, corresponding to the engagement position of the insertion pin 100, wherein the lower end of the actuating lever 105 is proximal to the toothed crown 85.

The blocking assembly further comprising elastic action means associated with the actuating lever 105 and adapted to automatically push the same towards the nearing position. Such elastic action means comprise, for example, an elastic traction spring provided with an end coupled near the toothed crown 85, for example connected to the support bracket 110 in a position proximal to the toothed crown 85, and with an opposite end, distal from the toothed crown 85, associated (coupled) with the actuating lever 105 at the lower end thereof.

The actuating lever 105 is therefore movable towards (and in) the distancing position in contrast to the elastic force of the traction spring, which otherwise tends to push the actuating lever 105 towards (and in) the nearing position.

The cutting member U, as anticipated, is associated with the second segment 50 and arranged at the second axial longitudinal end thereof made available by the second section 70.

The brush cutter tool 20 comprises a rotational drive assembly of the cutting member U, which allows the motion imposed by the power take-off of the agricultural machine 15 to be transmitted to the cutting member U.

The drive assembly makes it possible, in particular, to actuate the cutting device U both when the second segment 50 is in the first position and when the second segment 50 is in the second position, i.e. in any of the second positions.

In particular, the drive assembly is configured to transmit said motion imposed on the cutting member U so as to actuate the same with respect to a rotation axis orthogonal to the longitudinal axis L2 of the second segment 50.

The drive assembly comprising, first of all a first drive shaft 115 rotatably associated with the first segment 45 with respect to a first rotation axis R1, for example substantially vertical and transverse (e.g. orthogonal) to the longitudinal axis L1 of the first segment 45.

The first rotation axis R1 is parallel to the hinge axis C, preferably coincident (coaxial) with it, around which the second segment 50 rotates with respect to the first segment 45. In particular, the first drive shaft 115 can be rotatably inserted inside the first sleeve 75 fixed to the first segment 45, maintaining a single rotational degree of freedom around the first rotation axis R1 with respect to said first sleeve 75.

In detail, the first drive shaft 115 is inserted inside the first sleeve 75 with interposition of rolling elements, for example ball bearings, which allow the first drive shaft 115 to rotate inside the first sleeve 75.

More precisely, the first drive shaft 115 can be coaxially inserted inside the first sleeve 75, with the first rotation axis R1 therefore coinciding with the longitudinal central axis of the first sleeve 75, that is coinciding with the hinge axis C between the second segment 50 and the first segment 45.

A return pulley 120 or toothed return wheel and a first pulley 125 or first toothed wheel are keyed onto the first drive shaft 115, i.e. connected and integral in rotation.

The return pulley 120 is adapted to be connected to the power take-off of the agricultural machine 15.

For example, the return pulley 120 is connected to the drive pulley connected to the output shaft of the agricultural machine 15 by means of a flexible transmission member 145, for example a belt or chain, which transmits the rotary motion of the output shaft to the return pulley 120 (and thus also to the first drive shaft 115 and to the first pulley 125).

The drive assembly then comprises a second drive shaft 130 to which the cutting member U is associated (integral) in rotation, for example it is associated (integral) with a lower end of the second drive shaft 130.

The second drive shaft 130 is rotatably associated with the second segment 50 with respect to a second rotation axis R2, which is distinct and spaced out by a non-zero amount from the first rotation axis R1 (and aligned with the first shaft along the longitudinal axis L2 of the second segment 50).

In the embodiment illustrated, the second rotation axis R2 is parallel to the first rotation axis R1.

In particular, the second drive shaft 130 is associated with the second section 70 of the second segment 50.

More in detail, the second segment 50 can comprise a second sleeve 135, which is axially hollow and for example cylindrical, rigidly fixed (i.e. fixed without residual degrees of freedom) to the second section 70, for example to the base frame T3 of the second section 70.

In particular, the second sleeve 135 has a longitudinal central axis and is fixed to the second section, inside the third through channel defined by it, arranged with said longitudinal central axis transverse, for example orthogonal, to the longitudinal axis L2 of the second segment 50.

The second drive shaft 130 may be inserted within the second sleeve 135 fixed to the second section 70 of the second segment 50, maintaining a single rotational degree of freedom with respect to said second rotation axis R2.

In detail, the second drive shaft 130 is inserted inside the second sleeve 135 with interposition of rolling elements, for example ball bearings, which allow the second drive shaft 130 to rotate inside the second sleeve 135.

The first drive shaft 115 and the second drive shaft 130 are mechanically connected in rotation.

In particular, a second pulley 140 or toothed wheel connected in rotation to the first pulley 125 by means of a flexible connection member closed in a ring is keyed to the second drive shaft 130 (that is fixed and integral in rotation).

In particular, the second drive shaft 130 has an upper end which is arranged within the third through channel defined by the third tubular body of the second section 70 of the second segment 50, to which said second pulley 140 is keyed, and an opposite lower end which protrudes inferiorly beyond the first section 65 of the base frame T3 of the third tubular body, and is arranged externally to the third tubular body, to which the cutting member U is connected (and integral in rotation).

Returning to the conformation of the second segment 50, the second section 70 is connected to the first section 65 with the possibility of oscillating about an oscillation axis P parallel to the longitudinal axis L2 of the second segment 50, that is transverse, for example orthogonal, to the second rotation axis R2.

In particular, the cutting element U is integral with the second section 70 in the oscillation with respect to said oscillation axis P.

In other words, the second section 70 rotating about said oscillation axis P, by means of the second sleeve 135 rotates with itself the second drive shaft 130 and therefore the cutting member U connected thereto.

More precisely, the second section 70 rotates with respect to the first section 65 about said oscillation axis P by means of a (single) oscillation pin 150 defining said oscillation axis P.

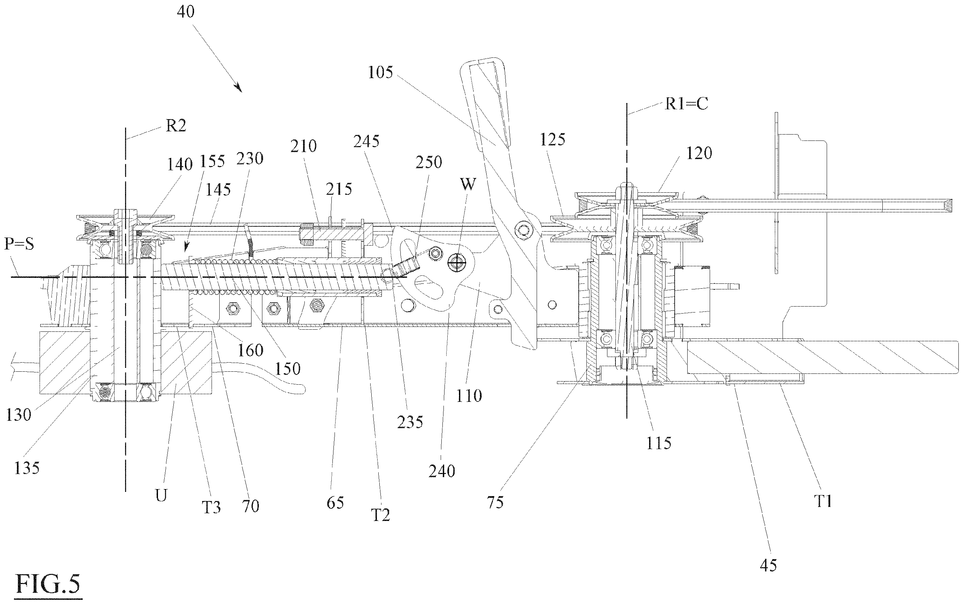

In detail, as better visible in figure 5, the first section 65 of the second segment 50 can comprise a third sleeve 155, which is axially hollow and for example cylindrical, rigidly fixed (i.e. fixed without residual degrees of freedom) to the first section 65, for example to the base frame T2 of the first section 65.

In particular, the third sleeve 155 has a longitudinal central axis and is fixed to the first section 65, within the second through channel defined by it, arranged with said longitudinal central axis parallel to the longitudinal axis L2 of the second segment 50.

The second section 70 then has a receiving seat facing the third sleeve 155 and coaxial thereto.

Said receiving seat is defined for example, by a through hole made in a connection plate 160 rigidly fixed to the base frame T3 of the second section 70. For example, such a connection plate 160 is arranged within the third through channel defined by the second section 70 of the second segment 50 and rises upwards, squarely, from the first section 65 of the base frame T3 of the second section 70.

The brush cutter tool 20, i.e. the oscillation assembly comprises said oscillation pin 150, the third sleeve 155 and the receiving seat made in the third section. The oscillation pin 150 is inserted coaxially and, substantially to size, inside the third sleeve 155 made in the first section 65 and also inserted, and substantially to size, inside the receiving seat made in the second section 70.

Furthermore, the oscillation assembly is configured to oscillate the second section 70 with respect to the first section 65 selectively between a reference position, in which the rotation axis of the cutting member U lies on a vertical plane, and an inclined position, in which the rotation axis of the cutting member U is transverse to said vertical plane.

The oscillation assembly comprises first of all a straight and rigid support bar 165, i.e. not deformable under the usual loads for which it is intended, which is arranged with its own central longitudinal axis Y lying on a plane perpendicular to the first rotation axis R1 and transverse, e.g. orthogonal, to the longitudinal axis L2 of the second segment 50 and transverse.

Further, this longitudinal axis is substantially horizontal.

The support bar 165 is hinged to the first section 65 of the second segment 50, i.e. by the base frame T2 of the first section 65 of the second segment 50, with respect to a rotation axis parallel (and coincident) to its own longitudinal central axis Y.

In particular, the support bar 165 can have opposite axial ends, each of which is inserted in a suitable receiving slot, made in a respective second section 70 of the base frame T2 of the first section 65 of the second segment 50.

Each end of the support bar 165 may therefore protrude beyond the slot, resulting external to the second through channel of the first section 65, and have a thread that allows the screwing of a blocking nut that prevents the axial extraction of the support bar 165 from the slot.

The support bar 165 is therefore inserted inside said slots with the possibility of rotating on itself around its own longitudinal central axis Y.

The oscillation assembly then comprises a first annular support 170, for example a first cam 240, and a second annular support 175, for example a second cam 240, which are fitted on the support bar 165 and rigidly fixed thereto, or fixed with no residual degrees of freedom to the support bar 165.

The first annular support 170 and the second annular support 175 are therefore rotationally integral (without angular shifts between them) to the support bar 165 around the longitudinal central axis Y of the support bar 165.

More in detail, the first annular support 170 and the second annular support 175 are arranged along the support bar 165 at a non-zero distance from each other along a direction parallel to the longitudinal central axis Y of the support bar 165 and are placed on opposite sides of the support bar 165 with respect to a vertical plane containing the oscillation axis P.

Each annular support has (in a respective perimeter contact profile or even cam profile) a first flat perimeter face, and a second preferably flat perimeter face angularly spaced from the first perimeter face with respect to the longitudinal axis of the support bar 165.

The first perimeter faces of the first annular support 170 and of the second annular support 175 are mutually coplanar, i.e. they are placed at the same radial distance from the longitudinal central axis Y of the support bar 165, while the second faces are placed at a different radial distance from the longitudinal central axis of the support bar 165.

For example, the second perimeter faces lie on parallel planes spaced out by a non-zero distance. However, it is not excluded that the second faces may lie on a single plane inclined with respect to the longitudinal axis of the support bar 165.

Said first and second annular support 175 are adapted to make a resting surface 180 available for a (flat) abutment surface 185 of the oscillation assembly made in the second section 70 and integral in oscillation around the oscillation axis P.

The abutment surface 185 is held in contact with the first annular support 170 and with the second annular support 175, i.e. with the first faces or with the second faces according to the rotation of the support bar 165, by means of a potential force.

Such potential force may be the weight force of a body making the abutment surface 185 available and/or an elastic element configured to push the abutment surface 185 against the first and second annular support 175. This body is, as will become clear below, the base frame T3 of the second section 70 of the second segment 50.

In particular, this abutment surface 185 of the oscillation assembly is rigidly integral with the base frame T3 of the second section 70 in the oscillation about the oscillation axis P. For example, the second section 70 may have a flange 190 fixed without residual degrees of freedom to the base frame T3 of the third tubular body, which is adapted to make available said abutment surface 185 of the second section 70 of the second segment 50 adapted for rest in abutment on said abutment surface 185 made available by the first annular support 170 and by the second annular support 175.

For example, said flange 190 can be made as a monolithic body with the base frame T3 of the second section 70 of the second segment 50.

In particular, said flange 190 may comprise two opposite and parallel lateral segments that are derived from the first base section 65 along a direction parallel to the longitudinal axis L2 of the second segment 50 (i.e., parallel to the oscillation axis P of the second section 70), and an accessory segment 195 that acts as a bridge between the lateral segments, that is it connects the lateral segments and is orthogonal thereto.

Each lateral segment of the flange 190 has a flat base surface which is turned and faces the first section 65 of the base frame T3 of the second tubular body defined by the first section 65 of the second segment 50, and said base surfaces are mutually coplanar and adapted to make available said abutment surface 185 of the second section 70.

Regardless of the exact architecture that makes the abutment surface 185 available, it is flat, as already mentioned, and lies on a plane perpendicular to the second rotation axis R2, in addition to being integral with said second rotation axis R2 in rotation with respect to the oscillation axis P.

The support bar 165 is, therefore, actuatable in rotation about its longitudinal central axis Y between a primary position, corresponding to the reference position of the second section 70 (i.e. of the cutting member U) and a secondary position, corresponding to the inclined position of the second section 70 (i.e. of the cutting member U).

In particular, in the primary position of the support bar 165 the first faces of the first annular support 170 and the second annular support 175 lie on a plane parallel to the oscillation axis P of the second section 70 (and perpendicular to the first rotation axis R1, for example horizontal) and the resting surface 180 for the abutment surface 185 of the second section 70 is made available by said first faces of the first annular support 170 and of the second annular support 175.

In the secondary position of the support bar 165, the second faces of the first annular support 170 and the second annular support 175 lie in respective planes parallel to the oscillation axis of the second section 70 (and perpendicular to the first rotation axis R1, for example horizontal) and the resting surface 180 for the abutment surface 185 of the second section 70 is made available by said second faces.

As mentioned above, however, it is not excluded that said faces may be coplanar, in which case in the secondary position of the support bar 165 the second faces of the first annular support 170 and of the second annular support 175 lie on a plane parallel to the oscillation axis of the second section 70 (and inclined with respect to the first rotation axis R1) and the resting surface 180 for the abutment surface 185 of the second section 70 is made available by said second faces.

Therefore, as a consequence of the rotation of the annular supports, in the primary position the abutment surface 185 lies on a first lying plane parallel to the oscillation axis P and perpendicular to the first rotation axis R1, while in the secondary position the abutment surface 185 lies on a second lying plane parallel to the oscillation axis P and inclined with respect to the first rotation axis R1.

The first lying plane and the second lying plane define an acute angle of less than 60°, e.g. less than 45°, at their intersection.

Between the primary position and the secondary position, the support bar 165 performs a rotation around its own longitudinal central axis equal to a certain angle smaller than the rounded angle, in particular equal to the acute angle defined by the intersection between the first lying plane and the second lying plane.

The brush cutter tool 20 further comprises an assembly for adjusting the position of the support bar 165 configured to selectively rotate the support bar 165 between the primary position and the secondary position.

The adjustment assembly is further configured to selectively block the support bar 165 in at least these two positions (i.e. in the primary position and in the secondary position).

The assembly for adjusting the position of the support bar 165 comprises, first of all, a second actuating lever 200 integral (i.e. fixed without residual degrees of freedom) to the support bar 165 for actuating it in rotation with respect to its longitudinal central axis.

The second actuating lever 200 is preferably arranged externally to the second segment 50 and has an upper end at which a gripping handle may be arranged, and an opposite lower end by means of which it is rigidly fixed (i.e. fixed without residual degrees of freedom) to the support bar 165, for example at an end of the support bar 165 protruding from the first section 65 of the second segment 50.

The adjustment assembly further comprises a blocking pin 205 integral with the lever and which is derived therefrom when nearing the first section 65 of the second segment 50, for example when nearing a lateral face of the second tubular body of the first segment 45 in proximity to which the second actuating lever 200 is arranged.

The blocking pin 205 can be selectively inserted into a first seat, which is made in said lateral face of the first section 65 and is positioned and shaped in such a way as to accommodate the blocking pin 205 to size in order to make a shape connection when the second actuating lever 200 is in the primary position.

In the same way, the blocking pin 205 can be selectively inserted into a second seat, which is made in said lateral face and is positioned and shaped in such a way as to accommodate the pin to size and make a shape connection with it when the lever is in the secondary position.

The first seat and the second seat are arranged along an arc of circumference having a vertex on the longitudinal central axis of the support bar 165 (i.e. on the rotation axis of the support bar 165).

Furthermore, the first seat and the second seat are angularly spaced apart along said arc of circumference by an angle equal to the angle of rotation performed by the support bar 165 between the primary position and the secondary position.

The adjustment assembly may also comprise an abutment pin 210 integral with the first section 65 and inserted in a slot integral with the second section 70.

The slot, in particular, has a (longitudinal) development such that in the reference position of the second section 70 the abutment pin 210 is placed in contact with a first end edge B1 of the slot, while in the inclined position of the second section 70, the abutment pin 210 is placed in contact on a second end edge B2 of the slot opposite the first edge B1. In other words, the abutment pin 210 acts as an end-of-stroke element which prevents further oscillation of the second section 70 with respect to the first section 65 around the oscillation axis P.

For example, said slot is obtained through the flange 190 fixed to the base frame T3 of the second section 70 of the second segment 50, and, in particular in the accessory segment 195 of the flange 190.

The tool 20 may comprise a protective case 220 associated with the second segment 50, in particular with the second section 70 of the second segment 50, and adapted to circumferentially delimit a working area within which the cutting member U rotates.

In particular, the protective case 220 delimits a zone of the working area towards the first segment 45, so as to protect the agricultural machine 15 and the user from the working member, i.e. the cutting member U, throwing bodies.

For example, the protective case 220 comprises an upper wall, conformed as a disc sector (subtended at a lower angle of 180°), from a radially outer perimeter edge of which a circumferentially curved lateral wall develops downwards, arranged with respect to the second rotation axis R2 and provided with an inner surface having a concavity turned towards the second rotation axis R2.

This lateral wall also comprises an outer surface turned towards the first segment 45. The protective case 220 is preferably rotatably connected to the second section 70 of the second segment 50, so that its orientation with respect to the second section 70 can change when the second segment 50 rotates with respect to the first section 65.

In the illustrated embodiment, the protective case 220 is rotatably associated with the second sleeve 135, however, it is not excluded that it may be rotatably associated with the base frame of the second section 70, according to a rotation axis parallel (coaxial) to the second rotation axis R2.

Even more preferably, the tool 20 comprises a blocking assembly (or orientation mechanism) configured to prevent rotation of the support case about said rotation axis parallel to the second rotation axis R2 during rotation of the second segment 50 between the first position and the second position.

In other words, said blocking assembly is configured in such a way that an imaginary line traceable on the protective case 220 and parallel to the longitudinal axis of the first section 65 when the second segment 50 is in the first position of rotation with respect to the first segment 45, remains parallel to said longitudinal axis also when the second segment 50 is in the second position of rotation with respect to the first segment 45 (and in all intermediate positions).

In the embodiment illustrated, such a blocking assembly comprises an articulated quadrilateral, of which the first segment 45 (for example a flange 190 which derives externally from its base frame) is the frame of the articulated quadrilateral and the protective case is the rod opposite the frame. Preferably the articulated quadrilateral is an articulated parallelogram.

In particular, the blocking assembly comprises a rod 225 (straight and rigid, i.e. not deformable when subjected to the usual loads for which it is intended) provided with an end hinged to the first segment 45 (in an eccentric position with respect to the rotation axis of the first segment 45 with respect to the second segment 50) with respect to at least a first hinge axis Q1 (parallel to the rotation axis of the first segment 45 with respect to the second segment 50) and an opposite end hinged to the protective case 220 (in an eccentric position with respect to the second rotation axis R2) with respect to a second hinge axis Q2 parallel and distinct from the first hinge axis Q1.

In the embodiment illustrated, the ends of said rod 225 are connected to the protective case 220 and to the first segment 45 by means of respective spherical joints.

Further, the distance between the rotation axis of the second segment 50 with respect to the first segment 45 and the first hinge axis Q1 is substantially equal to the distance between the second rotation axis R2 and the second hinge axis Q2, and the distance between the second rotation axis R2 and the rotation axis of the second segment 50 with respect to the first segment 45 is substantially equal to the distance between the first hinge axis Q1 and the second hinge axis Q2.

In this way, the articulated parallelogram is realised.

As better visible in Figure 5, the tool 20 can further comprise a tensioning assembly of the flexible transmission member 145 which is at least partially wound on the first pulley 125 and on the second pulley 140.

The particular tensioning assembly described below, although referring to the brush cutter tool, can be applied to any tool provided with: a first drive shaft, a second drive shaft to which a working member is rotationally associated, a first pulley integral in rotation with the first drive shaft, a second pulley integral in rotation with the second drive shaft and a flexible transmission member at least partially wound around the first pulley and the second pulley for the transmission of a rotary motion between the two pulleys.

In particular, as will become clear later, the tensioning assembly is configured to keep the flexible transmission member 145 suitably tensioned even following its elongation/wear. The tensioning assembly is, in particular, configured to push the second section 70 of the second segment 50 in a direction away from the first section 65 of the second segment 50 along a sliding axis S.

The sliding axis S is transverse, i.e. perpendicular to the first rotation axis R1 and the second rotation axis R2. In addition, the sliding axis S is parallel to the longitudinal axis L2 of the second segment 50.

Further, said sliding axis S is, for example, parallel to the oscillation axis P.

By pushing the second section 70 away from the first section 65, the tensioning assembly is configured to push the second drive shaft 130, which is for example associated with the second section 70 by means of the second sleeve 135 and therefore integral with the second section 70 slidingly along the sliding axis S, away from the first drive shaft 115, which first drive shaft 115 is rotatably associated (indirectly) with the first section 65.

In particular, the first drive shaft 115 is (directly) rotatably inserted within the first sleeve 75 to which the first section 65 is hinged according to a rotation axis coaxial to the first rotation axis R1.

In other words, the tensioning assembly, by pushing on the second section 70, pushes the second pulley 140, which is integral with the second drive shaft 130, away from the first pulley 125, which is integral with the first drive shaft 115, thus putting the flexible transmission member 145 wound thereon under tension.

In particular, the tensioning assembly can be configured to push the second section 70 in a direction away from the first section 65 along the sliding axis S constantly (i.e., at any instant of time), and automatically, i.e., without the need for adjustments by an operator using the tool 20.

The tensioning assembly comprises, first of all, an elastic body 230 interposed between the first section 65 and the second section 70 and arranged so that the elastic force generated by it is developed (mainly) along a direction parallel to the sliding axis S.

In particular, the elastic body 230 is configured to push the second section 70 in a direction away from the first section 65 along the sliding axis S, as anticipated above.

The second section is always kept pushed in the direction of away from the first section by the elastic body during the use of the tool.

In the absence of forces acting on the second section in the direction of the sliding axis, a distance of the second drive shaft from the first drive shaft is defined solely by the thrust exerted by the spring.

In the embodiment represented in the pictures, the elastic body 230 comprises a helical compression spring (i.e. exerting an elastic force that resists a compressive force exerted on the spring).

The helical spring is interposed between the first section 65 and the second section 70 and is also arranged with its own longitudinal axis, along which it mainly exerts the resistant elastic force, parallel to the sliding axis S.

In particular, the helical spring is interposed between the first portion 65 and the second portion 70 and mounted pre-compressed, i.e. in a state of deformation such that its length along the longitudinal axis is less than the length along the longitudinal axis of the spring in an undeformed state, i.e. in the absence of external forces acting on the helical spring. As can be better seen in said figure 5, the helical spring is provided with a first longitudinal end which is placed in abutment on the first section 65 and with an opposite longitudinal end which is placed in abutment on the second section 70.

For example, the first longitudinal end is placed in abutment on the third sleeve 155 (which accommodates the oscillation pin 150 and is fixed without residual degrees of freedom to the first section 65 of the second segment 50) that is on an edge of the proximal third sleeve 155 and facing the second segment 50, while the second longitudinal end is placed in abutment on the connection plate 160 (which is fixed without residual degrees of freedom to the second section 70 of the second segment 50 and on which the receiving seat for the oscillation pin is defined 150).

However, it is not excluded that in an embodiment not illustrated and less preferred due to its complexity and therefore greater possibility of malfunctions, instead of the elastic element there may be a linear actuator configured to push the second section 70 in the direction away from the first section 65.

The tool 20 can also comprise an end-stroke assembly configured to limit (only) the minimum distance between the first drive shaft 115 and the second drive shaft 130 along the sliding axis S, that is to limit the minimum distance between the first rotation axis R1 (of the first drive shaft 115) and the second rotation axis R2 (of the second drive shaft 130) along the sliding axis S.

The end-of-stroke assembly is, in other words, configured to obviate the possibility (that is to say, prevent) that, for example because of resistant forces due to normal use (which develop, for example, while mowing the turf) or due to expected impacts, the second drive shaft 130 may move closer to the first drive shaft 115. In that case, if the second driving shaft could be able to move towards the first driving shat, it would place the flexible transmission member 145 in a condition of failed of or insufficient tensioning, which could lead to a slippage thereof on the first pulley 125 and on the second pulley 140 and, therefore, to a failed operation of the working member (i.e. the cutting member U).

Overall, the end-of-stroke assembly is therefore configured to prevent a resisting force acting in the opposite direction to that of the elastic element along the sliding axis from overcoming the force of the elastic element (i.e. from causing deformation, particularly of the elastic element) causing the second drive shaft to approach the first drive shaft. The limit end-of-stroke assembly only prevents the second drive shaft from approaching the first drive shaft, leaving free the movement of the second drive shaft away from the first drive shaft under the force exerted by the element, rubber band.

The end-of-stroke assembly, in particular, can be configured to allow a variation of the value of the minimum distance between the first drive shaft 115 and the second drive shaft 130, i.e. between the first rotation axis R1 and the second rotation axis R2, with respect to the sliding axis S.

For example, in one embodiment not illustrated and less preferred, the end-of-stroke assembly can comprise a blocking body which can be selectively positioned, in a controllable manner (for example by screwing into a suitable thread), in a plurality of different positions along a direction parallel to the sliding axis S and adapted to block/prevent (for example by interference) the displacement of the second drive shaft 130 nearing the first drive shaft 115 along the sliding axis S beyond the position in which it is arranged (which therefore substantially defines said minimum distance).

In the preferred embodiment, visible in figure 5, the end-of-stroke assembly comprises a so-called tappet cam mechanism, provided with a cam rotatable with respect to the first section 65 of the second segment 50, i.e. to the base frame of the first section 65, according to a rotation axis perpendicular to the sliding axis S in which the tappet is made available by an abutment surface 235 of the second section 70 of the second segment 50, i.e. integral with the base frame of the second section 70 of the second segment 50, for example turned towards the first segment 45.

In particular, the tappet is made available by the oscillation pin 150 (which substantially defines the follower of the mechanism) which slides along the sliding axis S (however remaining axially contained within the third sleeve 155 integral with the first section 65 of the second segment 50).

The rotation of the cam 240 in a predetermined direction of rotation causes a thrust on the abutment surface 235 along the sliding axis S in the direction away from the first portion 65 of the second segment 50.

Just by way of simplification, with reference to Figure 5, the direction of rotation of the cam 240 is anti-clockwise.

Preferably, the end-of-stroke assembly is configured to automatically vary the value of the minimum distance between the first shaft and the second shaft on the basis of the value of the distance between the first shaft and the second shaft.

In such a case, the cam 240 of the mechanism is driven into rotation by its own weight force or at most by its own weight force and by a spring in the manner which will become more evident below.

In the illustrated embodiment, the end-of-stroke assembly comprises, first of all, an abutment surface 235 integral with the second section 70 slidingly along the sliding axis S in the direction nearing the first section 65.

Said abutment surface 235 is, for example, turned towards and facing one end of the first section 65 distal from the second section 70.

Said abutment surface 235 is, in the illustrated embodiment, made available by an axial end (lying on a flat surface) of the oscillation pin 150.

In particular, as better visible in figure 5, the oscillation pin 150 has a first axial end (which protrudes axially beyond the third sleeve 155 at the second section 70 and) which is placed in abutment on the second sleeve 135 inside which the second drive shaft 130 is slidingly associated, and an opposite second axial end (which protrudes axially beyond the third sleeve 155 at the first portion 65 and) which makes available said abutment surface 235.

In practice, the oscillation pin 150 is slidable with respect to both the first section 65 and the second section 70 along its oscillation axis P (which is then parallel to the sliding axis S) and is made integral with the second section 70 in the movement along the sliding axis S only when nearing the first section 65 by means of the thrust generated by the second sleeve 135 on the first end of the oscillation pin 150.

In fact, the second section 70 moving closer to the first section 65 pushes with the second sleeve 135 on the oscillation pin 150 causing it to slide inside the third sleeve 155 along the sliding axis S in the direction nearing the first section 65.

Therefore, the abutment surface 235 can slide with the second section 70 along the sliding axis S only in the nearing direction from the first section 65.

Were it not for the cam 240, the oscillation pin 150, therefore the abutment surface 235 would be free to move independently of the second section 70 in the direction away from the first section 65 along the sliding axis S.

The cam 240 (which substantially defines the moving part of the cam tappet mechanism 240) is rotatably associated with the first section 65 with respect to a substantially horizontal rotation axis W and transverse, preferably orthogonal, to the sliding axis S (and moreover lying on a plane perpendicular to the first rotation axis R1).

The rotation axis W of the cam 240 is also parallel to a lying plane of the abutment surface 235.

For example, the cam 240 can be hinged to the support bracket 110 (fixed without residual degrees of freedom to the, for example welded, to the base frame of the first section 65) and arranged inside the through channel of the second tubular body defined by the first section 65.

The cam 240 is adapted to be arranged (preferably directly) in contact with the abutment surface 235.

In particular, the cam 240 has a cam profile 245 by means of which it is placed (directly) in abutment on the abutment surface 235 made available for example by the oscillation pin 150.

Said cam profile 245 is, in particular, defined by an arc of a circle subtended at an angle having its centre on the rotation axis of the cam 240 and less than 180°.

In particular, the cam profile 245 has an upper end (i.e., placed at a height along the upper vertical in use) which is located at a distance from the rotation axis W, and a lower end, i.e. placed at a height along the lower vertical axis in use) which is located at a distance from the rotation axis W less than the distance between the upper end and the rotation axis of the cam 240.

In addition, the cam profile 245 has a gradually smaller distance from the rotation axis W with a monotonous decreasing course from the upper end to the lower end.

The cam profile 245 is therefore placed in abutment on the abutment surface 185, with the cam 240 free to rotate around its own rotation axis under the effect of its own weight force, so that a rotation of the cam 240 with respect to its rotation axis in a predetermined direction of rotation, that is in the direction that causes a lowering of the upper end along the vertical, causes a thrust on the abutment surface 185 in the distancing direction of the second section 70 from the first section 65 along the sliding axis S.

As mentioned above, the preferred end-of-stroke assembly is configured to automatically vary the value of the minimum distance between the first drive shaft 115 and the second drive shaft 130 based on the value of the distance between the first drive shaft 115 and the second drive shaft 130.

In other words, the distance between the first drive shaft 115 and the second drive shaft 130 along the sliding axis S, i.e., the distance between the first rotation axis R1 and the second rotation axis R2, varies according to the wear/elongation conditions of the flexible transmission member 145 by means of the tensioning assembly which pushes the second section 70 away from the first section 65 so as to keep (at all times) the flexible transmission member 145 in tension.

The end-of-stroke assembly can therefore be configured to adapt the minimum distance between the first drive shaft 115 and the second drive shaft 130 to the distance defined between them by means of the tensioning assembly.

More in detail, the end-of-stroke assembly is configured so that the minimum distance is equal to the distance defined by means of the tensioning assembly.

In other words, the end-of-stroke assembly makes it possible to prevent any retraction along the sliding axis S of the second section 70, or any approach of the second drive shaft 130 to the first drive shaft 115.

In particular, following a "correction", i.e. a variation, of the distance between the first drive shaft 115 and the second drive shaft 130 by the tensioning assembly, the oscillation pin 150 may be in a condition such that its first axial end is not in abutment on the second sleeve 135 inside which the second drive shaft 130 is slidably received.

In this condition, the minimum possible distance between the first drive shaft 115 and the second drive shaft 130 would be less than the distance defined between said shafts by means of the tensioning assembly.

In fact, in this condition, for example following an impact, the second drive shaft 130 may retract along the sliding axis S until the second sleeve 135 comes into abutment again on the first end of the oscillation pin 150.

The proposed end-of-stroke assembly, on the other hand, makes it possible to "correct", i.e. to vary automatically (without the need for adjustment by an operator), the minimum distance each time, and substantially simultaneously, the tensioning assembly varies the distance between the first drive shaft 115 and the second drive shaft 130.

In fact, as the tensioning assembly pushes the first second drive shaft 130 away from the first drive shaft 115, the cam 240, by effect of its own weight force, rotates and, thanks to its particular profile, pushes on the abutment surface 185 of the oscillation pin 150 causing it to slide along the sliding axis S in the direction away from the first section 65 keeping it, substantially continuously abutting on the second sleeve 135 integral with the second section 70.

As mentioned above, the rotation of the cam 240 about its rotation axis W may be assisted by an elastic element 250.

In particular, said elastic element 250 can be configured to pull, i.e. to exert a traction force such as to push, downwards, the cam 240, i.e. to push the cam 240 in rotation in the predetermined direction (direction such as to lower (with respect to the vertical) the upper end of the cam profile 245).

Such an elastic element 250 comprises, for example, a helical traction spring provided with a longitudinal axis along which it mainly exerts said elastic traction force.

The elastic spring is arranged with said longitudinal axis orthogonal to the rotation axis of the cam 240.

In particular, said elastic spring has a first axial end which is connected (coupled) to the first section 65 and an opposite second end which is connected (coupled) to the cam 240, for example in a position interposed between the cam profile 245 (between the upper and lower ends of the cam profile 245) and the rotation axis of the cam 240.

For example, the first end of the elastic spring may be coupled on the base frame T2 of the first section 65, while the second end of the elastic spring is coupled on a lug made on the cam 240, for example made available by a pin fitted in a through slot made on the cam 240 and arranged with a longitudinal axis parallel to the rotation axis.

In the embodiment illustrated, in the first position the longitudinal axis of the first segment and the longitudinal axis of the second segment are parallel to each other (and for example lie on the vertical centreline plane of the agricultural machine).

In the second position, the longitudinal axis of the second segment is inclined with respect to the vertical centreline of the agricultural machine.

Furthermore, the length of the second segment in the direction of the respective longitudinal axis and the angle between the first segment and the second segment in the second position are such that the second rotation axis protrudes laterally with respect to the maximum overall lateral dimensions of the agricultural machinery when the second segment is in the second position.

Furthermore, the protective case is shaped in such a way as to protrude laterally with respect to the maximum overall dimensions of the agricultural machine. Furthermore, when the second segment is in the second position in rotation with respect to the first segment, the protective case protrudes laterally on one side only with respect to the maximum overall dimensions of the agricultural machine (more than half protrudes with respect to the maximum overall dimensions).

The invention thus conceived is susceptible to several modifications and variations, all falling within the scope of the appended claims.

## Claims

1. Tool (20) comprising:
- a first section (65) and a second section (70) slidingly associated with the first section (65) with respect to a sliding axis (S),
- a working member (U),
- a rotational drive assembly of the working member provided with:
∘ a first drive shaft (115) rotatably associated with the first section (65) with respect to a first rotation axis (R1),
∘ a second drive shaft (130) rotatably associated with the second section (70) with respect to a second rotation axis (R2) and to which the working member is rotationally associated,
∘ a first pulley (125) integral in rotation with the first drive shaft (115) and a second pulley (140) integral in rotation with the second drive shaft (130),
∘ a flexible transmission member (145) at least partially wound around the first pulley (125) and the second pulley (140) for the transmission of a rotary motion between the two pulleys,
- a tensioning assembly of the flexible transmission member (145), said tensioning assembly being configured to push the second section (70) away from the first section (65) along the sliding axis (S), wherein the tensioning assembly comprises an elastic body (230) interposed between the first section (65) and the second section (70) and configured to push the second section (70) in a direction away from the first section (65) along the sliding axis (S), the tool (20) comprising an end-of-stroke assembly configured to limit the minimum distance between the first drive shaft (115) and the second drive shaft (130) along the sliding axis (S), preventing the second drive shaft (130) from moving towards the first drive shaft (115), wherein the end-of-stroke assembly is configured to allow a variation in the value of the minimum distance between the first drive shaft (115) and the second drive shaft (130).

2. Tool (20) according to claim (2), wherein the elastic body (230) is a helical compression spring. ,

3. Tool (20) according to the preceding claim, wherein the end-of-stroke assembly is configured to automatically vary the value of the minimum distance between the first shaft and the second shaft based on the value of the distance between the first shaft and the second shaft.

4. Tool (20) according to claim 1 or 3, wherein the end-of-stroke assembly comprises:
- an abutment surface (235) integral with the second section (70) sliding along the sliding axis (S) and turned towards an end of the first section (65) distal from the second section (70),
- a cam (240) rotatably associated with the first section (65) with respect to a rotation axis transverse to the sliding axis (S) and which contacts the abutment surface (235), so that a rotation of the cam (240) with respect to its rotation axis in a predetermined direction of rotation causes a thrust on the abutment surface (235) in the direction in which the second shaft moves away from the first shaft.

5. Tool (20) according to the preceding claim, wherein the rotation axis of the cam (240) is horizontal and perpendicular to the sliding axis (S) and the cam (240) is provided with a cam profile (245) subtended at an angle having a centre on the rotation axis of the cam (240) and less than 180° and that from its upper end which is at a predetermined distance from the rotation axis, it gradually presents a smaller distance from the rotation axis with a monotonous decreasing course until a lower end of the cam profile (245).

6. Apparatus (10) for landscaping comprising:
- an agricultural machine (15) provided with a support frame, a pair of drive wheels (30) rotatably associated with said frame, a motor fixed to said frame and mechanically connected to an output shaft of the agricultural machine (15) itself,
- a tool (20) according to claim 1, wherein the first drive shaft (115) is adapted to be mechanically coupled to the output shaft to receive a torque therefrom.

## Patentansprüche

1. Werkzeug (20), umfassend:
- einen ersten Abschnitt (65) und einen zweiten Abschnitt (70), der mit dem ersten Abschnitt (65) in Bezug auf eine Gleitachse (S) gleitend assoziiert ist,
- ein Arbeitselement (U),
- - eine Drehantriebsanordnung des Arbeitselements, die versehen ist mit:
∘ ∘ einer ersten Antriebswelle (115), die in Bezug auf eine erste Drehachse (R1) drehbar mit dem ersten Abschnitt (65) assoziiert ist,
∘ ∘ einer zweiten Antriebswelle (130), die in Bezug auf eine zweite Drehachse (R2) drehbar mit dem zweiten Abschnitt (70) assoziiert ist und womit das Arbeitselement drehbar assoziiert ist,
∘ einer ersten Riemenscheibe (125), die drehfest mit der ersten Antriebswelle (115) verbunden ist, und einer zweiten Riemenscheibe (140), die drehfest mit der zweiten Antriebswelle (130) verbunden ist,
∘ einem flexiblen Übertragungselement (145), das zumindest teilweise um die erste Riemenscheibe (125) und die zweite Riemenscheibe (140) gewickelt ist, um eine Drehbewegung zwischen den beiden Riemenscheiben zu übertragen,
- einer Spannanordnung des flexiblen Übertragungselements (145), wobei die Spannanordnung konfiguriert ist, um den zweiten Abschnitt (70) entlang der Gleitachse (S) von dem ersten Abschnitt (65) wegzuschieben, wobei die Spannanordnung einen elastischen Körper (230) umfasst, der zwischen dem ersten Abschnitt (65) und dem zweiten Abschnitt (70) angeordnet und konfiguriert ist, um den zweiten Abschnitt (70) entlang der Gleitachse (S) in eine Richtung weg von dem ersten Abschnitt (65) zu schieben, das Werkzeug (20) eine Hubende-Anordnung umfasst, die konfiguriert ist, um den Mindestabstand zwischen der ersten Antriebswelle (115) und der zweiten Antriebswelle (130) entlang der Gleitachse (S) zu begrenzen und die zweite Antriebswelle (130) daran zu hindern, sich in Richtung der ersten Antriebswelle (115) zu bewegen, wobei die Hubende-Anordnung konfiguriert ist, um eine Variation des Werts des Mindestabstands zwischen der ersten Antriebswelle (115) und der zweiten Antriebswelle (130) zuzulassen.

2. Werkzeug (20) nach Anspruch (2), wobei der elastische Körper (230) eine spiralförmige Druckfeder ist.

3. Werkzeug (20) nach dem vorherigen Anspruch, wobei die Hubende-Anordnung konfiguriert ist, um den Wert des Mindestabstands zwischen der ersten Welle und der zweiten Welle basierend auf dem Wert des Abstands zwischen der ersten Welle und der zweiten Welle automatisch zu verändern.

4. Werkzeug (20) nach Anspruch 1 oder 3, wobei die Hubende-Anordnung Folgendes umfasst:
- eine Anschlagfläche (235), die fest mit dem zweiten Abschnitt (70) verbunden ist, die entlang der Gleitachse (S) gleitet und zu einem Ende des ersten Abschnitts (65) gedreht ist, das distal von dem zweiten Abschnitt (70) ist,
- einen Nocken (240), der in Bezug auf eine Drehachse quer zu der Gleitachse (S) drehbar mit dem ersten Abschnitt (65) assoziiert ist und der die Anschlagfläche (235) berührt, sodass eine Drehung des Nockens (240) in Bezug auf seine Drehachse in einer vorbestimmten Drehrichtung einen Schub auf die Anschlagfläche (235) in der Richtung bewirkt, in der sich die zweite Welle weg von der ersten Welle bewegt.

5. Werkzeug (20) nach dem vorherigen Anspruch, wobei die Drehachse des Nockens (240) horizontal und senkrecht zu der Gleitachse (S) ist und der Nocken (240) mit einem Nockenprofil (245) versehen ist, das unter einem Winkel mit einem Mittelpunkt auf der Drehachse des Nockens (240) und weniger als 180° ist und das von seinem oberen Ende, das in einem vorbestimmten Abstand von der Drehachse ist, allmählich einen kleineren Abstand von der Drehachse mit einem monoton abnehmenden Verlauf bis zu einem unteren Ende des Nockenprofils (245) aufweist.

6. Vorrichtung (10) für Landschaftsgestaltung, umfassend:
- eine Landmaschine (15), die mit einem Tragrahmen versehen ist, ein Paar Antriebsräder (30), die drehbar mit dem Rahmen assoziiert sind, einen Motor, der an dem Rahmen befestigt und mechanisch mit einer Abtriebswelle der Landmaschine (15) an sich verbunden ist,
- ein Werkzeug (20) nach Anspruch 1, wobei die erste Antriebswelle (115) angepasst ist, um mechanisch mit der Abtriebswelle gekoppelt zu, um ein Drehmoment davon aufzunehmen.

## Revendications

1. Outil (20) comprenant :
- une première section (65) et une deuxième section (70) associée de manière coulissante à la première section (65) par rapport à un axe coulissant (S),
- un élément actif (U),
- un ensemble d'entraînement de rotation de l'élément de travail pourvu de :
∘ un premier arbre d'entraînement (115) associé de manière rotative à la première section (65) par rapport à un premier axe de rotation (R1),
∘ un deuxième arbre d'entraînement (130) associé de manière rotative à la deuxième section (70) par rapport à un deuxième axe de rotation (R2) et auquel l'élément de travail est associé de manière rotative,
∘ une première poulie (125) solidaire en rotation du premier arbre d'entraînement (115) et une deuxième poulie (140) solidaire en rotation du deuxième arbre d'entraînement (130),
∘ un élément de transmission flexible (145) au moins en partie enroulé autour de la première poulie (125) et de la deuxième poulie (140) aux fins de la transmission d'un mouvement de rotation entre les deux poulies,
- un ensemble de mise sous tension de l'élément de transmission flexible (145), ledit ensemble de mise sous tension étant configuré pour éloigner la deuxième section (70) de la première section (65) le long de l'axe coulissant (S), l'ensemble de mise sous tension comprenant un corps élastique (230) interposé entre la première section (65) et la deuxième section (70) et configuré pour pousser la deuxième section (70) dans une direction éloignée de la première section (65) le long de l'axe coulissant (S), l'outil (20) comprenant un ensemble de fin de course configuré pour limiter la distance minimale entre le premier arbre d'entraînement (115) et le deuxième arbre d'entraînement (130) le long de l'axe coulissant (S), empêchant le deuxième arbre d'entraînement (130) de se déplacer vers le premier arbre d'entraînement (115), l'ensemble de fin de course étant configuré pour permettre une variation de la valeur de la distance minimale entre le premier arbre d'entraînement (115) et le deuxième arbre d'entraînement (130).

2. Outil (20) selon la revendication (2), dans lequel le corps élastique (230) est un ressort de compression hélicoïdal.

3. Outil (20) selon la revendication précédente, dans lequel l'ensemble de fin de course est configuré pour faire varier automatiquement la valeur de la distance minimale entre le premier arbre et le deuxième arbre en fonction de la valeur de la distance entre le premier arbre et le deuxième arbre.

4. Outil (20) selon la revendication 1 ou 3, dans lequel l'ensemble de fin de course comprend :
- une surface de butée (235) intégrée à la deuxième section (70) coulissant le long de l'axe coulissant (S) et tournée vers une extrémité de la première section (65) distale de la deuxième section (70),
- une came (240) associée de manière rotative à la première section (65) par rapport à un axe de rotation transversal à l'axe coulissant (S) et qui entre en contact avec la surface de butée (235), de manière à ce qu'une rotation de la came (240) par rapport à son axe de rotation dans un sens de rotation prédéterminé provoque une poussée sur la surface de butée (235) dans la direction dans laquelle le deuxième arbre s'éloigne du premier arbre.

5. Outil (20) selon la revendication précédente, dans lequel l'axe de rotation de la came (240) est horizontal et perpendiculaire à l'axe coulissant (S) et la came (240) est pourvue d'un profil de came (245) sous-tendu à un angle ayant un centre sur l'axe de rotation de la came (240) et inférieur à 180° et qui, à partir de son extrémité supérieure qui est à une distance prédéterminée de l'axe de rotation, présente progressivement une distance plus faible de l'axe de rotation avec un cours décroissant monotone jusqu'à une extrémité inférieure du profil de la came (245).

6. Appareil (10) destiné à l'aménagement paysager comprenant :
- une machine agricole (15) équipée d'un châssis de support, d'une paire de roues motrices (30) associées de manière rotative audit châssis, d'un moteur fixé audit châssis et relié mécaniquement à un arbre de sortie de la machine agricole (15) elle-même,
- outil (20) selon la revendication 1, dans lequel le premier arbre d'entraînement (115) est conçu pour être couplé mécaniquement à l'arbre de sortie afin de recevoir un couple de celui-ci.
